# EUROPÄISCHE PATENTSCHRIFT

(11) **EP 0 673 099 B1**
(45) Veröffentlichungstag und Bekanntmachung des Hinweises auf die Patenterteilung: **30.08.2000**
(21) Anmeldenummer: 95810160.2
(22) Anmeldetag: 10.03.1995
(51) Int. Cl.: H02G 1/12

(54) **Verfahren zum Abtrennen und/oder Abisolieren sowie eine Vorrichtung zur Durchführung dieses Verfahrens**
Method and device for cutting and/or stripping
Procédé et dispositif pour couper et/ou dénuder des fils isolés

(30) Priorität: 16.03.1994 CH 77894
(43) Veröffentlichungstag der Anmeldung: 20.09.1995
(73) Patentinhaber: KOMAX HOLDING AG, 6036 Dierikon (CH)
(72) Erfinder: Koch, Max, CH-6045 Meggen (CH); Lustenberger, Alois, CH-6014 Littau (CH)
(74) Vertreter: Werffeli, Heinz R., Dipl.-Ing.ETH.

(56) Entgegenhaltungen:
- EP-A- 0 358 509
- CH-A- 643 406
- DE-A- 2 622 362
- US-A- 4 942 789
- US-A- 4 981 054

## Beschreibung

Die Erfindung betrifft ein Verfahren sowie eine Vorrichtung zum Abtrennen und/oder Abisolieren von mindestens einer Lage einer Ummantelung eines kabelförmigen Leiters.

Die bisherigen Abisoliervorrichtungen weisen den gravierenden Nachteil auf, daß mindestens eine Lage einer Ummantelung eines dünnen, sehr flexiblen kabelförmigen Leiters nicht auf einfache und rationelle Weise genau abgetrennt und/oder abisoliert werden kann, da solche Leiterendabschnitte beim Einführen in eine Abisoliervorrichtung stark durchhängen, was zur Folge hat, daß einerseits ihre Ausgangsposition nicht genau mittels eines Kabelendanschlages (US-A-4 981 054, US-A-4 942 789) definierbar ist, und andererseits mit ihnen nicht wie bisher (US-A-4 981 054) bei einigermaßen formstabilen Leitern üblich, mit deren freiem Ende ein Anschlag- und Kontaktteil zur Inbetriebsetzung der Abisoliervorrichtung betätigt werden kann.

Aufgabe der vorliegenden Erfindung ist die Schaffung eines Verfahrens der eingangs genannten Art, welches die vorangehend angeführten Nachteile bisher bekannter Verfahren dieser Art nicht aufweist, d.h. mittels welchem mindestens eine Lage einer Ummantelung eines selbst äußerst dünnen, sehr flexiblen kabelförmigen Leiters auf einfache und sehr rationelle Weise an seiner Längsrichtung gemessen sehr genau abgetrennt und/oder abisoliert werden kann.

Diese Aufgabe wird bei einem verfahren der eingangs genannten Art erfindungsgemäss nach Anspruch 1 gelöst.

Zweckmäßige Weiterausgestaltungen des erfindungsgemässen Verfahrens sind Gegenstand der Ansprüche 2 und 3.

Gegenstand der Erfindung ist außerdem eine Vorrichtung zur Durchführung des erfindungsgemässen Verfahrens nach Anspruch 4.

Zweckmäßige Weiterausgestaltungen der erfindungsgemässen Vorrichtung sind Gegenstand der Ansprüche 5 bis 15.

Nachstehend wird die Erfindung anhand der Zeichnungen beispielsweise erläutert. Es zeigt:
- Fig.1: einen Längsschnitt durch eine erste beispielsweise Ausführungsform einer erfindungsgemässen Abisoliervorrichtung;
- Fig.2: eine Stirnansicht der Vorrichtung in Richtung des Pfeiles A in Figur 1;
- Fig.3: einen Schnitt längs der Linie III-III in Figur 1;
- Fig.4: eine Stirnansicht einer Schneidenzentrierbacke in Richtung des Pfeils C in Figur 3;
- Fig.5: einen Grundriß des Rotorkopfes in Richtung des Pfeiles D in Figur 1, jedoch mit den Schneidmessern in horizontaler Ausrichtung zur ungehinderten Einführung des zu bearbeitenden Leiterendabschnittes von oben;
- Fig.6: einen Schnitt längs der Linie VI-VI in Figur 5;
- Fig. 7: ein Blockschalt-Schema zur in den Figuren 1 bis 6 dargestellten Vorrichtung;
- Fig. 8a bis 8h: schematisch die wichtigsten Schritte des erfindungsgemässen Verfahrens in Horizontalansicht analog zu Figur 5;
- Fig.9: einen Längsschnitt durch eine zweite beispielsweise Ausführungsform einer erfindungsgemässen Abisoliervorrichtung;
- Fig.10: einen Schnitt längs der Linie X-X in Figur 9;
- Fig.11a: eine Stirnansicht einer in vertikaler Richtung entgegen der Wirkung einer Drahtfeder verschiebbar geführten Zentrierzunge in Richtung des Pfeils C in Figur 10;
- Fig.11b: einen Schnitt längs der Linie E-E in Fig. 10 in Richtung auf eine Schneidenzentrierbacke;
- Fig.12: einen Grundriß des Rotorkopfes in Richtung des Pfeiles D in Figur 9, jedoch mit den Schneidmessern in horizontaler Ausrichtung zur ungehinderten Einführung des zu bearbeitenden Leiterendabschnittes von oben;
- Fig.13: einen Schnitt längs der Linie XIII-XIII in Figur 12; und
- Fig.14a bis 14h: analog zu den Figuren 8a bis 8h schematisch die wichtigsten Schritte des mittels der in Figur 9 dargestellten Abisoliervorrichtung durchgeführten Abisolierverfahrens.

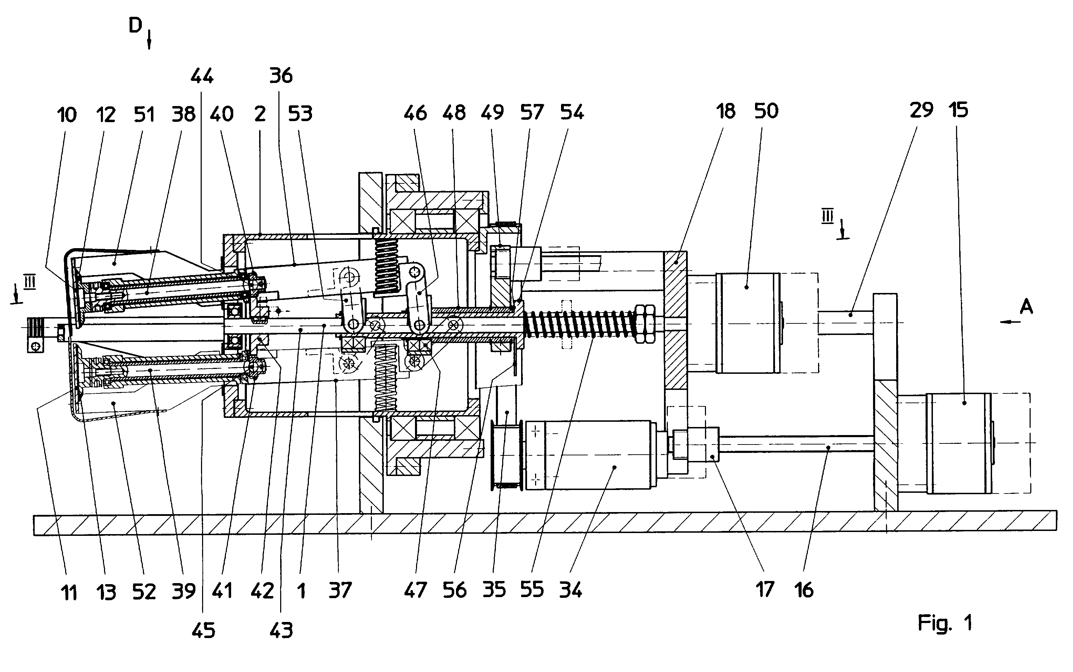

Wie aus den Figuren 1 bis 8 ersichtlich, weist die in diesen Figuren dargestellte erste beispielsweise Ausführungsform einer erfindungsgemässen Vorrichtung einen drehbar sowie längs seiner Längsaxe 1 verschiebbaren Rotorkopf 2 auf.

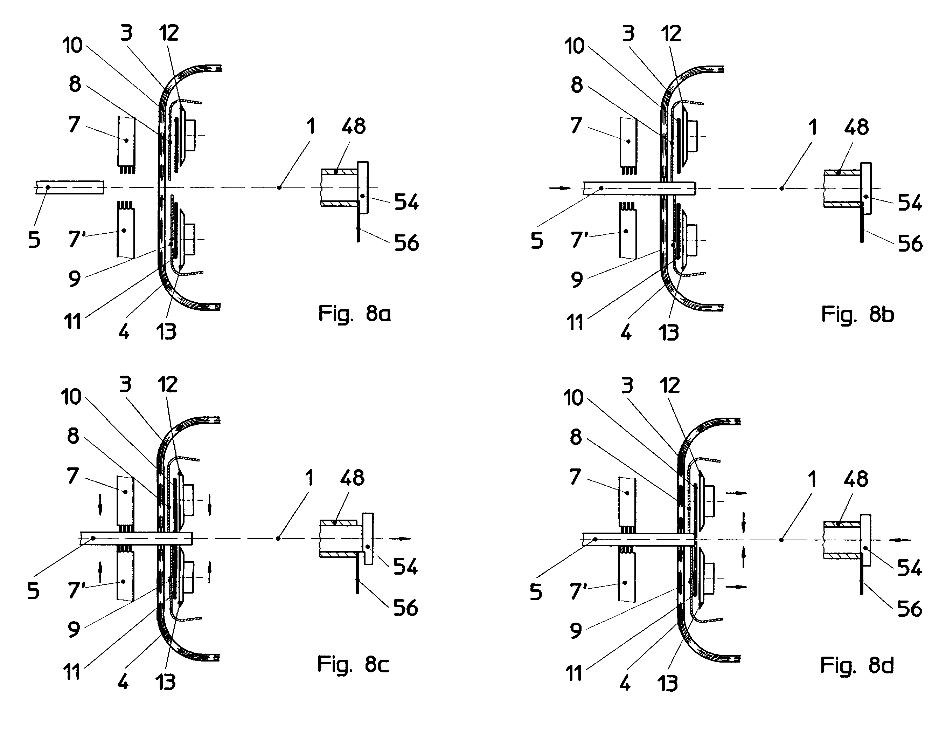

Eine mit Lichtleitern 3 und 4 versehene, gegen Fremdlicht möglichst unempfindlich ausgebildete optische Überwachungsanordnung ist zur Grobausrichtung und optischen Abtastung eines zu bearbeitenden Leiterendabschnittes 5 (siehe Figuren 8a bis 8h) mit einer Aufnahmeausnehmung 6 zur Einlegung des letzteren versehen.

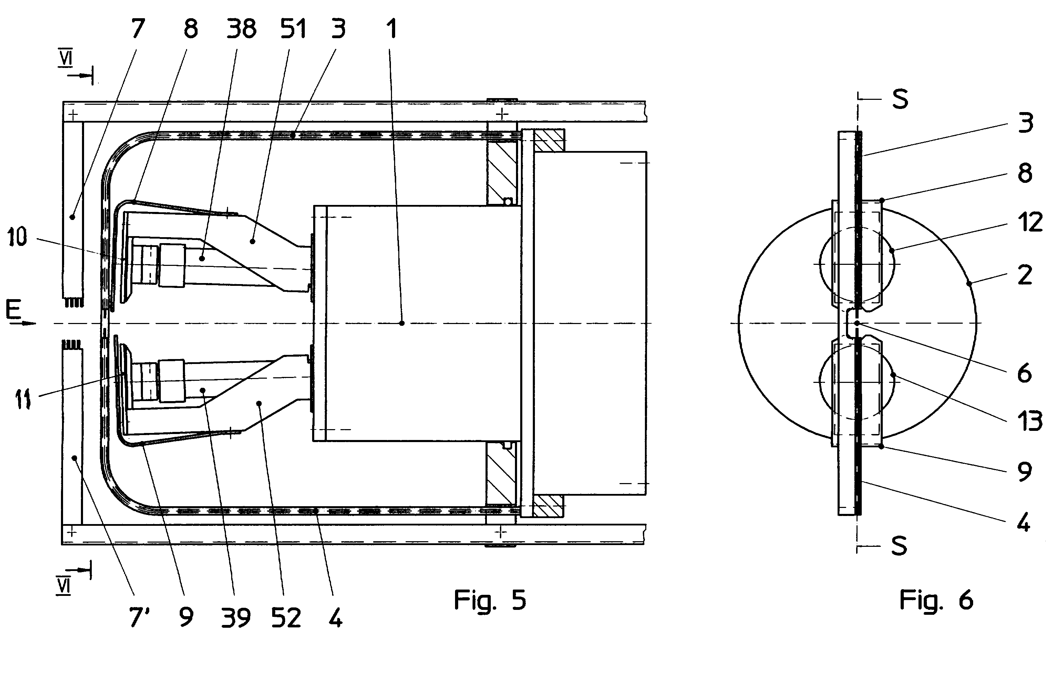

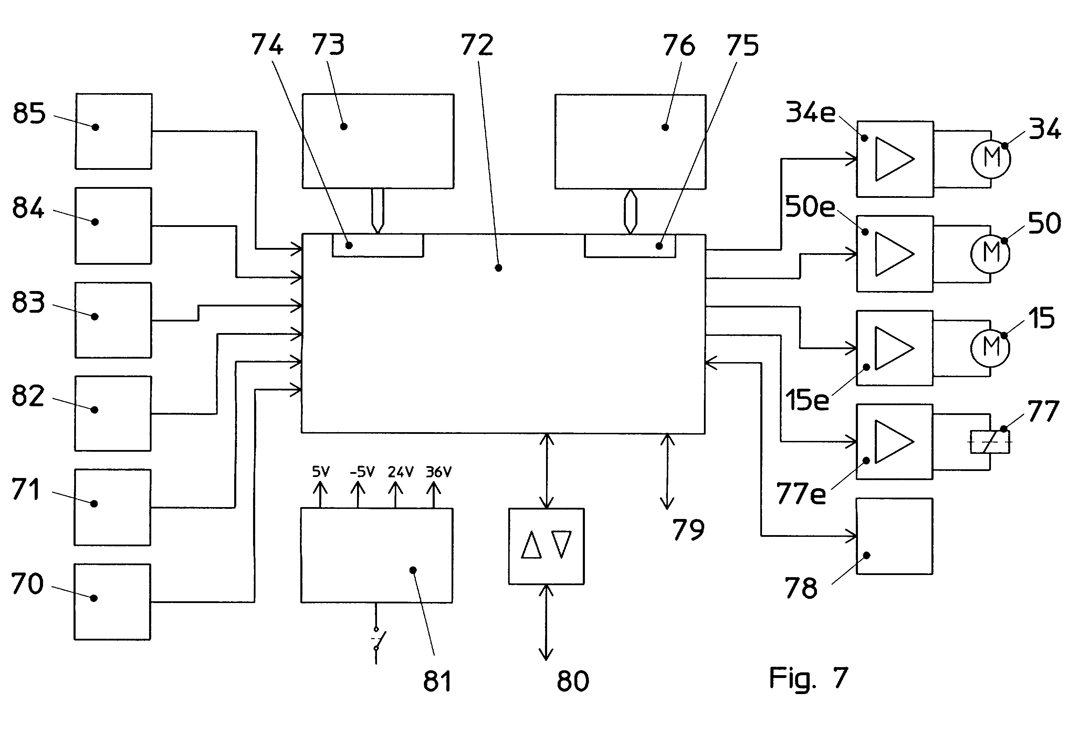

Die optische Überwachungsanordnung ist wie aus Fig. 7 ersichtlich mit einer Auswertschaltung 70 verbunden, welch letztere derart ausgebildet ist, daß bei Einführung eines zu bearbeitenden Leiterendabschnittes 5 in die Vorrichtung und damit in die Aufnahme- und Abtastausnehmung 6 die Festlegung der Ausgangsposition des eingeführten Leiterendabschnittes 5 und unmittelbar danach die Inbetriebsetzung des Abtrenn- und Abisoliervorganges ausgelöst wird. Zur Fixierung der Axialausgangsposition des zu bearbeitenden Leiterendabschnittes 5 sind auf bekannte Weise zwei von einer Offenstellung (Fig. 5 und 8a) in eine Fixierstellung (Fig.8c bis 8h) schwenkbare Spannbacken 7 und 7' vorgesehen.

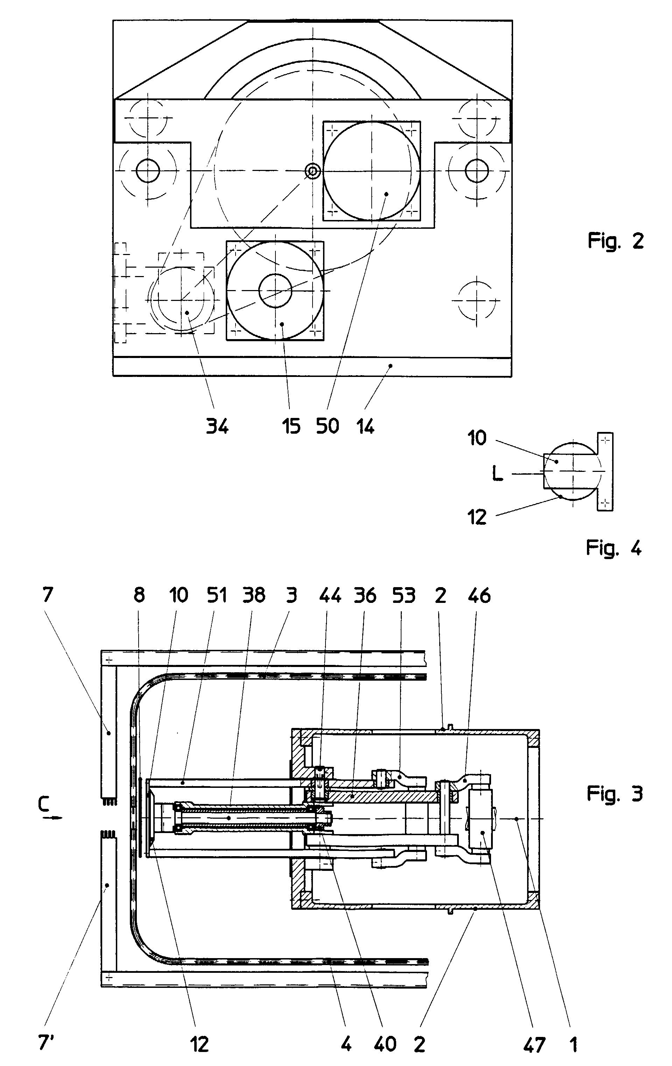

Zur Grobzentrierung des Leiterendabschnittes 5 dienen federnd an die Außenseite des letzteren anlegbare Zentrierzungen 8 und 9, und zur Feinzentrierung sind, wie insbesondere aus den Figuren 4 und 5 ersichtlich, zwei Schneidenzentrierbacken 10 und 11 zur radialen, den Leiterendabschnitt 5 an der Zentrierstelle so wenig wie nur möglich verformenden Anlage an der Außenseite der zu bearbeitenden Ummantelung des Leiters vorgesehen.

Zur Abisolierung eines Leiterendbereiches sind unmittelbar seitlich neben den beiden Schneidenzentrierbacken 10 und 11 zwei auf eine genau bestimmte Schneidtiefe in Eingriff mit der zu entfernenden Lage der Ummantelung eines Leiters bringbare, unabhängig von ihrer durch die Rotation des Rotorkopfes 2 bestimmten Drehbewegung um den zu bearbeitenden Leiterendabschnitt herum in der Art eines Fräsers separat angetriebene scheibenförmige, bezüglich der Leiterlängsachse einander diametral gegenüberliegende Schneidmesser 12 und 13 vorgesehen.

Zur Verschiebung der auf dem Rotorkopf 2 gemeinsam angeordneten, in radialer Richtung verstellbaren Zentrierbacken 10 und 11 und Schneidmesser 12 und 13 in axialer Richtung des Rotorkopfes 2 auf die jeweils gewünschte Abschneidlänge und Zurückverschiebung dieser Teile nach erfolgter Durchtrennung des gewünschten abzutrennenden Ummantelungsabschnittes zusammen mit dem letzteren ist eine Vorschub- und Rückzugsanordnung vorgesehen, welche durch einen starr mit der Grundplatte 14 verbundenen Schrittmotor 15 gebildet wird, der über eine mit ihm antriebsmassig verbundene Spindel 16 in eine Spindelmutter 17 eingreift, die ihrerseits fest mit einem Tragteil 18 verbunden ist. Der Tragteil 18 ist über vier Verbindungsbolzen mit einer Tragplatte verschraubt, welche über einen Hülsenteil zur drehbaren Lagerung des Rotorkopfes 2 dient, und mittels des Schrittmotors 15 als eine Einheit auf zwei stangenförmigen Führungswellen auf die verschiedenen Abisolier- und Rückzugspositionen verschiebbar sind.

Der Rotorkopf 2 wird von einem Gleichstrommotor 34 über einen Zahnriemen 35 angetrieben.

Wie insbesondere aus den Figuren 1 und 3 ersichtlich, sind bei der dargestellten Ausführungsform die Schneidmesser 12 und 13 am einen Hebelarmende je einer zweiarmigen Hebelanordnung 36 bzw. 37 drehbar gelagert angeordnet, und stehen zu ihrem Antrieb über je eine Antriebswelle 38 bzw. 39 und einem darauf befestigten Zahnrad 40 bzw. 41 mit einem relativ zum Rotorkopf 2 stillstehenden Zahnrad 42 in Antriebseingriff. Das Zahnrad 42 ist seinerseits starr auf einer nicht rotierenden Welle 43 befestigt, so daß bei einer Drehung des Rotorkopfes 2 um dessen Längsaxe 1 die scheibenförmigen Schneidmesser 12 und 13 ihrerseits um ihre Rotationsachsen in Rotation versetzt werden.

Die beiden Hebelanordnungen 36 und 37 sind wie aus den Figuren 1 und 3 ersichtlich, um je eine senkrecht zur Rotorkopf-Längsaxe 1 verlaufende Schwenkaxe 44 bzw. 45 schwenkbar im Rotorkopf 2 gelagert.

Selbstverständlich wäre es auch denkbar, diese Hebelanordnungen 36 und 37 als einarmige Hebel auszubilden, indem die mit dem Rotorkopf 2 fest verbundene Schwenkachse sich am vom Schneidmesser abgewandten Ende des Hebels befindet und die zum Verstellen des Hebels dienende Kniehebelanordnung zwischen den beiden Enden des zugeordneten Hebels mit diesem gelenkig verbunden ist.

An ihrem dem Schneidmesser 12 bzw. 13 abgewandten anderen Ende sind die beiden Hebelanordnungen 36 und 37 über eine Kniehebelanordnung 46 sowie eine Kugellagereinheit 47 mit einem längs der Rotorkopf-Längsaxe 1 bzw. der Welle 43 verstellbaren, nicht rotierenden Verschiebeteil 48 synchron zueinander verstellbar verbunden, wobei in Fig.1 zur Darstellung der beiden möglichen Endpositionen der beiden Schneidmesser im oberen Teil das Schneidmesser 12 in der Nullpunktlage, d.h. in der einen Extremlage, und im unteren Teil das zweite Schneidmesser 13 in der anderen Extremlage, eingezeichnet ist.

Der Verschiebeteil 48 ist über einen Zwischenteil 49 antriebsmässig mit dem Schrittmotor 50 verbunden und mit Hilfe des letzteren längs der Welle 43 und damit relativ zum Rotorkopf 2 präzis verschiebbar.

Zur genauen Zentrierung des abzuisolierenden Leiters ist unmittelbar vor jedem der beiden rotierbaren Schneidmesser 12 und 13 je eine Schneidenzentrierbacke 10 bzw. 11 vorgesehen, die am einen Ende je einer weiteren zweiarmigen Hebelanordnung 51 bzw. 52 angeordnet sind. Die beiden letzteren sind um je eine senkrecht zur Rotorkopf-Längsaxe 1 verlaufende Schwenkaxe schwenkbar im Rotorkopf 2 gelagert, wobei diese Schwenkaxen im vorliegenden Fall mit den Schwenkaxen 44 und 45 der beiden zugeordneten Schneidmesser-Hebelanordnungen 36 und 37 übereinstimmen. Auf diese Weise sind die Schneidenzentrierbacken 10 und 11 relativ zu den zugeordneten Schneidmessern 12 bzw. 13 und annähernd parallel zu diesen schwenkbar.

Die Schneidenzentrierbacken-Hebelanordnungen 51 und 52 sind an ihrem der jeweiligen Schneidenzentrierbacke 10 bzw. 11 abgewandten anderen Ende über eine weitere Kniehebelanordnung 53 mit einem längs der Rotorkopf-Längsaxe 1 verstellbaren zweiten Verschiebeteil 54 synchron und genau symmetrisch zueinander verstellbar verbunden.

Dieser zweite Verschiebeteil 54 ist in Öffnungsrichtung der Zentrierbacken 10 und 11 gesehen, d.h. in Figur 1 nach rechts, in seiner Verschieberichtung über eine in ihrer Druckkraft einstellbare Druckfeder 55 indirekt gegenüber dem ersten, den Schneidmessern 12 und 13 zugeordneten Verschiebeteil 48 federnd abgestützt, und liegt in Schliessrichtung der Schneidenzentrierbacken 10 und 11, d.h. in Figur 1 nach links, über einen Drucksensor 56 an einem durch die rechte Stirnseite 57 des ersten Verschiebeteiles 48 gebildeten Anschlag an. Auf diese Weise wird erreicht, daß die ganz schwach klemmende Zentrierkraft der Schneidenzentrierbacken 10 und 11 auf den Ausgangsaussendurchmesser des abzuisolierenden Leiters selbst bei sehr starken Abisolierabstufungen an der Zentrierstelle immer praktisch unverändert von der Stellung der Schneidmesser 12 und 13, d.h. von Schneiddurchmesser der letzteren, bleibt.

Selbstverständlich wäre es auch möglich, den ersten und den zweiten Verschiebeteil 48 und 54 unter Weglassung der Druckfeder 55 unabhängig voneinander über je einen separaten Schrittmotor längs ihrer gemeinsamen Längsaxe 1 zu verstellen.

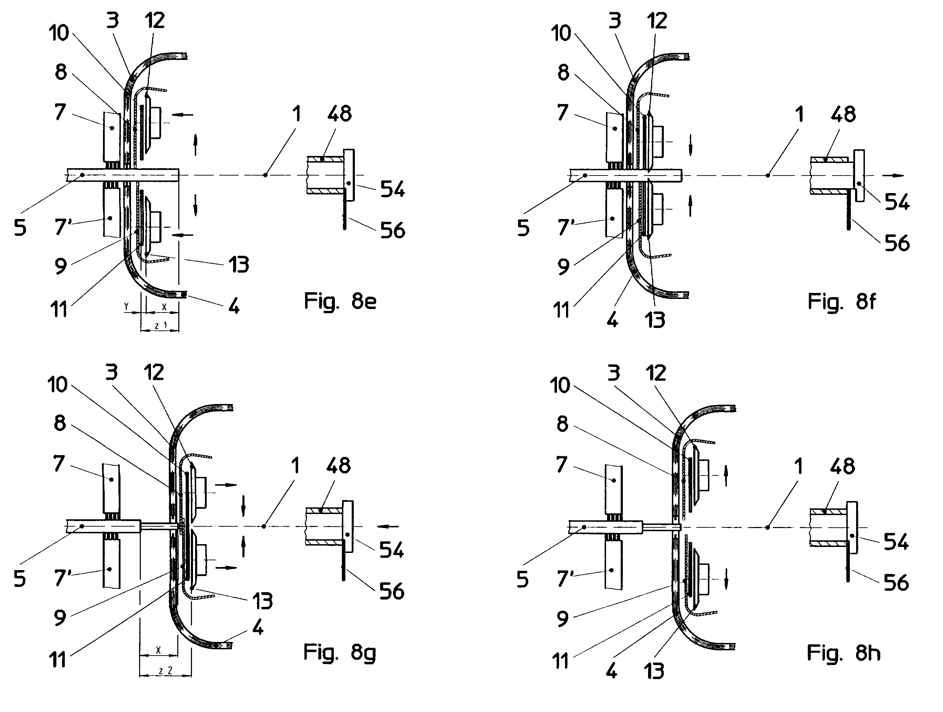

Zur Erzielung einer einwandfreien Feinzentrierung des abzuisolierenden Leiters während dem Abisoliervorgang stehen die Schneidenzentrierbacken 10 und 11, wie insbesondere aus den Fig. 4,8 und 8a ersichtlich, im Bereich ihrer Leitererfassungsstelle L in ihrer Ruhestellung unter der Wirkung der Federkraft der Druckfeder 55 geringfügig über die Schneidkante der Schneidmesser 12 und 13 hervor.

Die verschiedenen aufeinanderfolgenden Schritte des erfindungsgemässen Verfahrens werden nun nachstehend anhand der Figuren 8a bis 8h schematisch erläutert:

Wie aus den Figuren 8a und 8b ersichtlich, wird der zu bearbeitende Leiterendabschnitt 5 in die Vorrichtung eingeführt und zwischen den Schneidmessern 12 und 13 in die Ausnehmung 6 der Überwachungsanordnung 3,4,70 abgelegt, worauf diese ein Schließen der Spannbacken 7 und 7' sowie ein Zusammenfahren der Hebelanordnung 51,52 und damit der zuerst angreifenden Grobzentrierung 8,9 und der anschließend angreifenden Feinzentrierung 10,11 bis zur Anlage auf dem zu bearbeitenden Leiterendabschnitt 5 bewirkt, wodurch die vorher hervorstehende Schneidenzentrierbacken 10 und 11 relativ zu den zugeordneten Schneidmessern 12 und 13 geringfügig nach außen und damit der Verschiebeteil 54, wie aus Figur 8c ersichtlich, von der rechten Stirnseite 57 des ersten Verschiebeteiles 48 weg (in den Figuren 1 und 8c nach rechts) und damit außer Druckanlage am Drucksensor 56, bewegt wird. Dadurch wird ein festgelegter unterer Druck-Schwellwert unterschritten, was in der mit dem Drucksensor 56 verbundenen Druck-Schwellwert-Auswertschaltung 71 ein Abtast-Startsignal bewirkt, das der Mikroprozessorsteuerung 72 zugeführt wird und in der letzteren den Leiterendabtastvorgang initialisiert.

Anschließend wird der Rotorkopf 2 mittels des über eine Endstufe 15e mit der Mikroprozessorsteuerung 72 verbundenen Schrittmotors 15 in diesen Figuren nach rechts bewegt, bis die Schneidenzentrierbacken 10,11 das Leiterende erreichen (Fig. 8d) und von diesem abgleiten, wodurch die vorher entgegen der durch die Druckfeder 55 ausgeübten Druckkraft zurückgedrückten Schneidenzentrierbacken 10 und 11 relativ zu den zugeordneten Schneidmessern 12 und 13 geringfügig nach innen und damit der Verschiebeteil 54, wie aus Figur 8d ersichtlich, gegen den Anschlag 57 zu (in den Figuren 1 und 8d nach links) und damit in Druckanlage am Drucksensor 56 bewegt wird. Dadurch wird der in der Auswertschaltung 71 eingegebene untere Druck-Schwellwert wieder überschritten, was in der mit dem Drucksensor 56 verbundenen Druck-Schwellwert-Auswertschaltung 71 ein Abtastendsignal bewirkt, das der Mikroprozessorsteuerung 72 zugeführt wird und in der letzteren bewirkt, daß diese dem Leiterende entsprechende Axialposition des Rotorkopfes 2 und damit der Schneidmesser 12 und 13 abgespeichert wird.

Danach werden die Schneidmesser 12 und 13 sowie die vorher als Leiterendabtaster wirkenden Schneidenzentrierbacken 10 und 11 mit Hilfe des Schrittmotors 50 in Öffnungsstellung (Fig. 8e) bewegt und mit Hilfe des Schrittmotors 15 soweit nach links zurückgefahren, daß der Abstand x der Schnittstelle der Schneidmesser 12,13 vom Leiterende der gewünschten Abisolierlänge entspricht.

Anschließend werden die Schneidmesser 12,13 mit Hilfe des Schrittmotors 50 auf den gewünschten Schneiddurchmesser zusammengefahren (Fig. 8f), der Rotorkopf 2, und in vorliegendem Fall auch die Schneidmesser 12,13 mit Hilfe des Gleichstrommotors 34 in Rotation versetzt, so daß die gewünschte Ummantelungslage schneidend durchtrennt wird, und diese derart abgetrennte Ummantelungslage durch Verschiebung des Rotorkopfes 2 mit Hilfe des Schrittmotors 15 nach rechts mittels der Schneidmesser 12,13 nach rechts abgeschoben (Fig. 8g), worauf dieser Abisoliervorgang beendigt ist, die Schneidmesser 12,13 wieder in Öffnungsstellung bewegt werden (Fig. 8h), und anschließend z.B. ein weiterer, abgestufter Abisoliervorgang am gleichen Leiterendabschnitt 5 analog durchgeführt werden kann.

Der Schrittmotor 50 zur Verstellung des Schneiddurchmessers der Schneidmesser 12,13 und der Schneidenzentrierbacken 10,11 bzw. zur Aufrechterhaltung von deren eingestellter Lage bei rotierendem oder stillstehendem Rotorkopf 2 ist, wie aus Fig. 7 ersichtlich über eine Endstufe 50e mit der Mikroprozessorsteuerung 72 verbunden.

Der Schrittmotor 15 zur Verstellung des Rotorkopfschlittens längs der Rotorlängsaxe 1 ist über eine Endstufe 15e mit der Mikroprozessorsteuerung 72 verbunden, welche ihrerseits noch über ein Interface 74 mit einer Eingabetastatur 73 sowie über ein Interface 75 mit einer LCD-Anzeige 76 verbunden ist.

Die Spannbacken 7,7' werden auf bekannte Weise entgegen einer Federkraft mit Hilfe eines Elektromagneten 77 in ihre Leitereinspannstellung bewegt, wobei dieser Elektromagnet 77, wie aus Fig. 7 ersichtlich, zu seiner Ansteuerung über eine Endstufe 77e mit der Mikroprozessorsteuerung 72 verbunden ist.

Die Mikroprozessorsteuerung 72 ist ferner mit digitalen Ein- und Ausgängen 78, einer Erweiterungs-Schnittstelle 79, einer seriellen Schnittstelle 80, einer Speisung 81, einem die Schneidmesserzustellkraft abtastenden Kraftsensor 82, mit dem Rotorkopfschlitten zugeordneten Endschaltern 83, der Schneidmesserverstellung zugeordneten Endschaltern 84, sowie die Drehlage des Rotorkopfes 2 abtastenden Lagesensoren 85 verbunden. Die letzteren dienen dazu, daß der Antrieb des Rotorkopfes 2 derart gesteuert wird, daß die Schneidmesser 12,13 sich in der Leitereinlegphase zum ungehinderten Einlegen des zu bearbeitenden Leiterendabschnitte 5 von oben in die Vorrichtung in einer Horizontalebene befinden (siehe Figur 5).

Die Nullpunktjustierung der Schneidmesser 12,13 kann auf bekannte Weise mittels eines Messbolzens erfolgen.

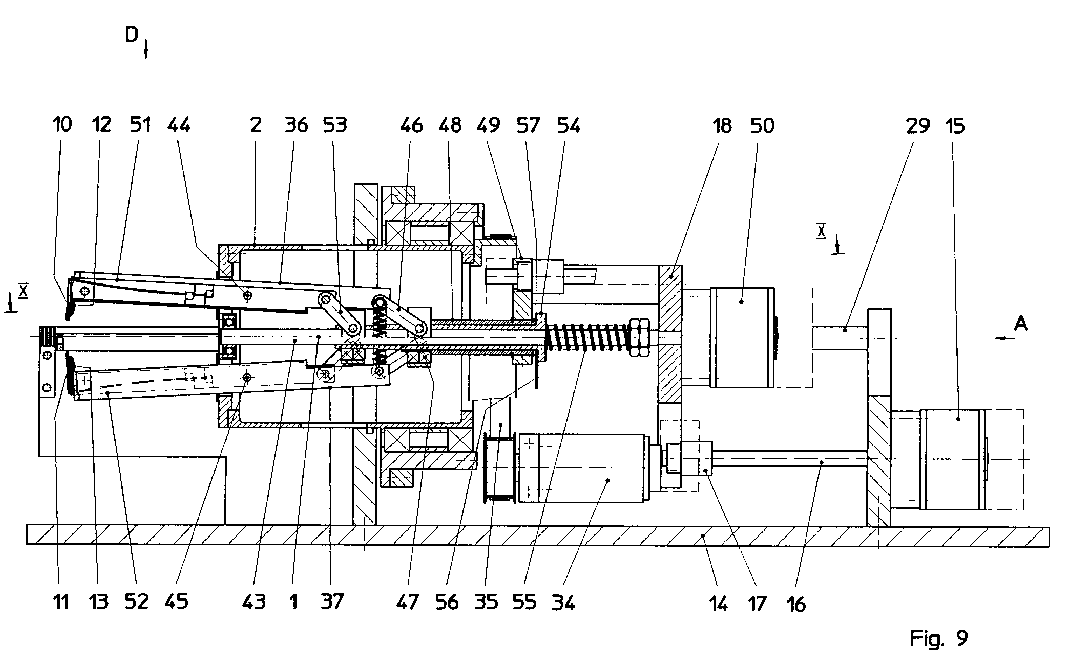

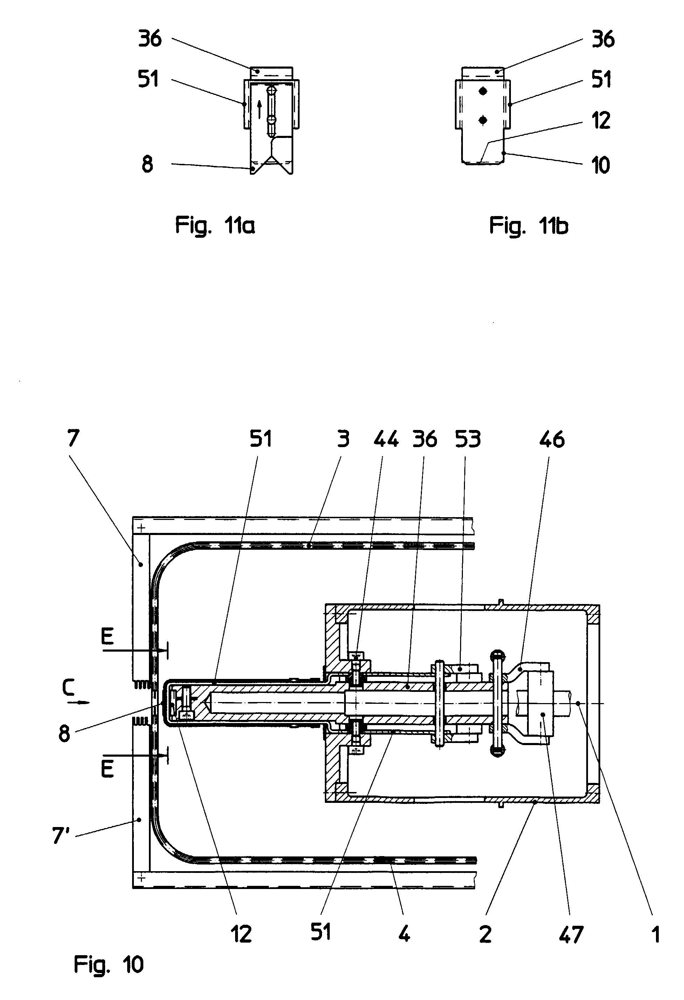

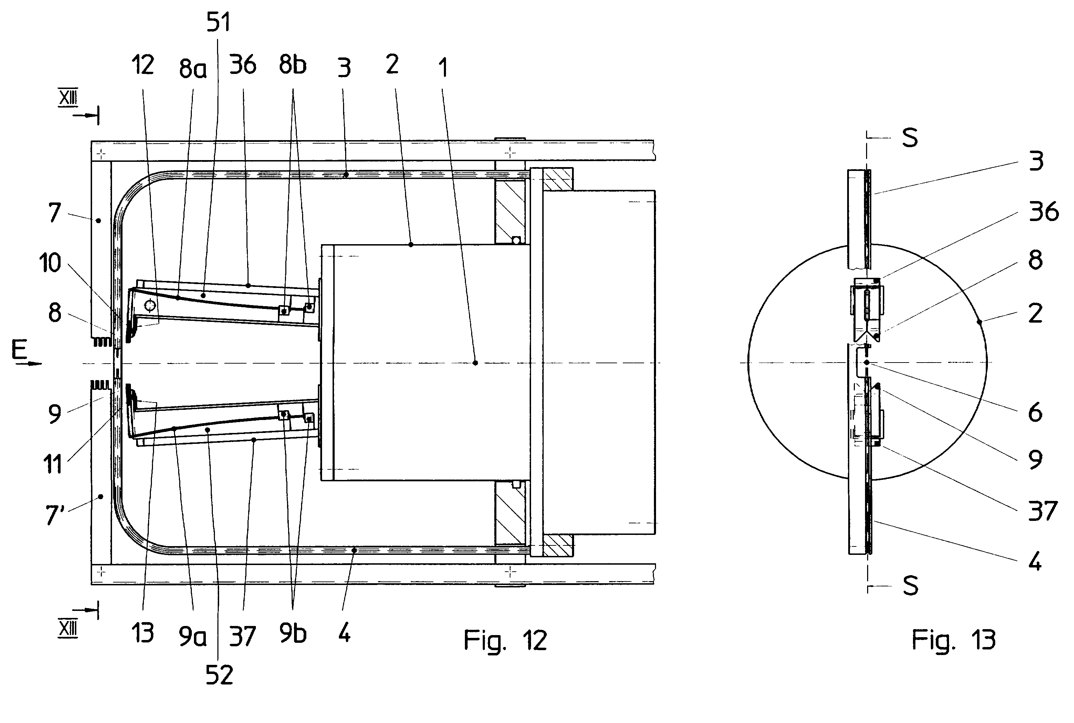

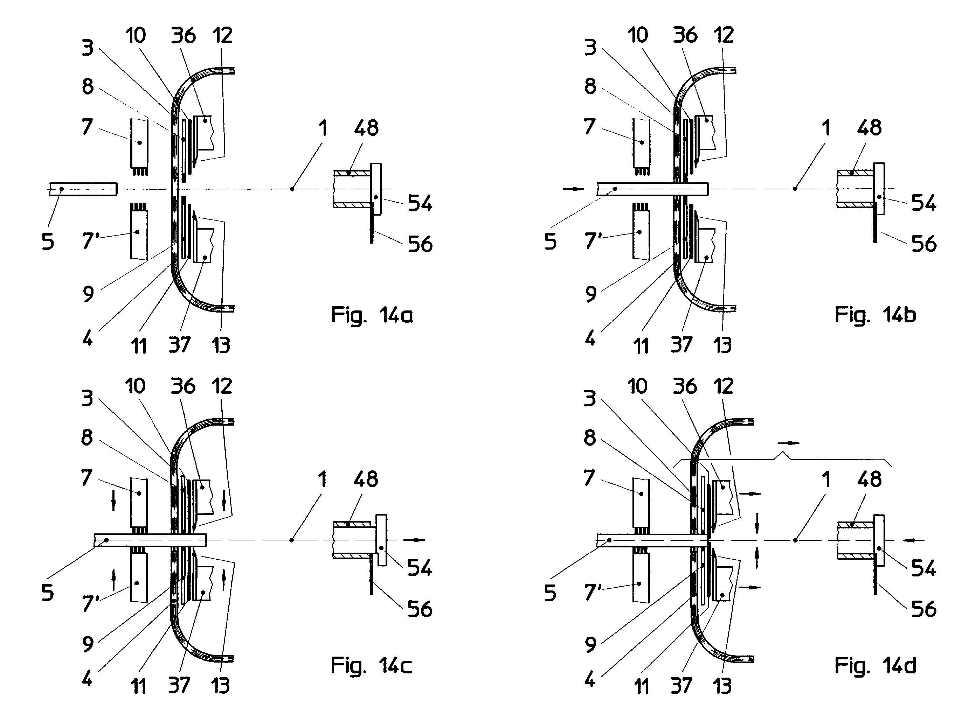

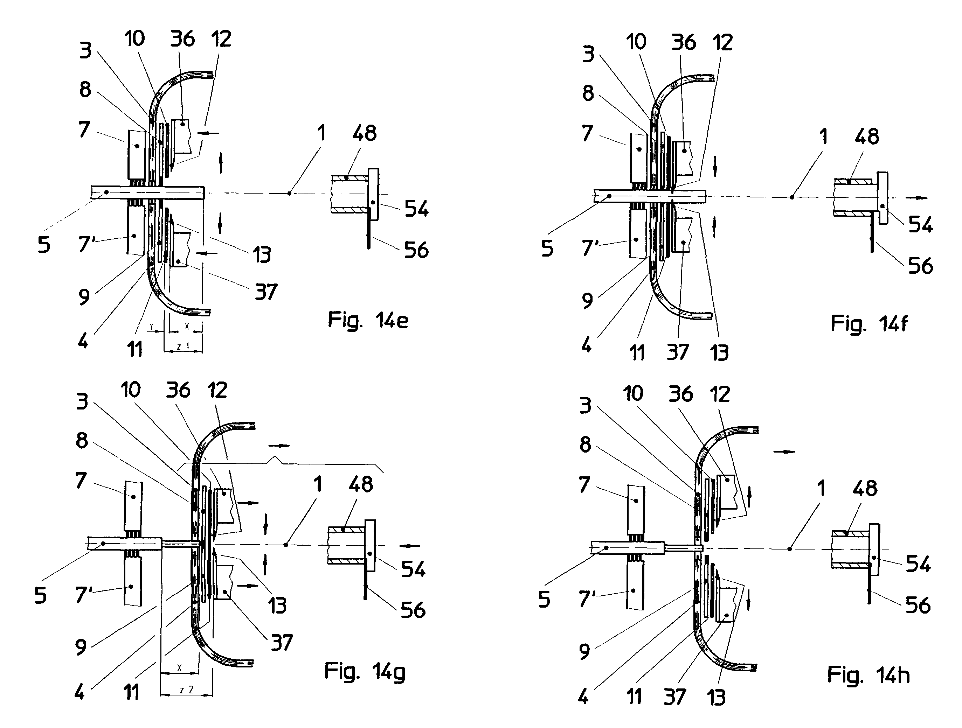

Anstatt drehbar angetriebener scheibenförmiger Schneidmesser 12 und 13 können selbstverständlich auch, wie an sich bekannt, nicht rotierende, mit einer geraden Schneidkante versehene Schneidmesser vorgesehen werden, wie dies nachstehend anhand eines in den Figuren 9 bis 14h dargestellten zweiten Ausführungsbeispieles ersichtlich ist. In diesen Figuren sind zum ersten Ausführungsbeispiel analoge Teile mit gleichen Bezugszeichen versehen, so dass sich eine nochmalige Erläuterung dieser Teile erübrigt.

Wie aus den Figuren 9 bis 13 ersichtlich, sind bei diesem zweiten Ausführungsbeispiel die Schneidmesser 12 und 13 auswechselbar am einen Hebelarmende je einer zweiarmigen Schneidmesser-Hebelanordnung 36 bzw. 37 angeordnet.

Die den beiden Schneidmessern 12 und 13 zugeordneten, relativ und unabhängig zu diesen annähernd parallel verschiebbbaren Schneidenzentrierbacken 10 und 11 sind je am einen Hebelarmende je einer zweiarmigen Schneidenzentrierbacken-Hebelanordnung 51 und 52 befestigt, und mit je einer Zentrierzunge 8 bzw. 9 versehen. Diese Zentrierzungen 8 bzw. 9 sind aus der in Fig. lla eingezeichneten unteren Position entgegen der Federwirkung je einer Drahtfeder 8a bzw. 9a nach oben verschiebbar. Diese Drahtfedern 8a und 9a sind an ihren rückwärtigen Endbereichen mittels der Befestigungselemente 8b bzw. 9b fest mit der Schneidenzentrierbacken-Hebelanordnung 51 bzw. 52 verbunden.

## Patentansprüche

1. Verfahren zum Abtrennen und/oder Abisolieren von mindestens einer Lage einer Ummantelung eines kabelförmigen Leiters mittels mindestens zweier Schneidmesser, wobei man das zu bearbeitende Leiterende hinter dem zu bearbeitenden Leiterendabschnitt (5) ergreift und in seiner Axiallage festhält, darauf mittels einer in Längsrichtung dieses Leiterendabschnittes (5) relativ zu diesem gegen das freie Ende desselben zu verschiebbaren Abtastanordnung das freie Ende dieses Leiterendabschnittes (5) feststellt, dann die Schneidmesser (12,13) um einen der Abtrenn- und/oder Abisolierlänge entsprechenden Betrag (X) von der vorher ermittelten Endposition zurückversetzten Betrag in schneidenden Eingriff mit dem zu bearbeitenden Leiterendabschnitt (5) bringt, nach Durchtrennung der gewünschten Lage diese mittels der Schneidmesser (12,13) längs des letzteren gegen das Ende desselben zu verschiebt, und diesen Abtrenn- und/oder Abisoliervorgang gegebenenfalls ein- oder mehrmals mit abgestufter Einschneidtiefe wiederholt.

2. Verfahren nach Anspruch 1, dadurch gekennzeichnet, daß man den zu bearbeitenden Leiterendabschnitt (5) unmittelbar neben der Abtaststelle mittels einer den letzteren (5) mindestens teilweise umfassenden Zentrieranordnung (8,9) in seiner Axiallage zentriert.

3. Verfahren nach Anspruch 1 oder 2, dadurch gekennzeichnet, daß man eine längs des zu bearbeitenden Leiterendabschnittes (6) verschiebbare mechanische Abtastanordnung (10,11,56,71) verwendet und das Leiterende über einen die Zustellkraft der Abtastanordnung abtastenden Drucksensor feststellt.

4. Vorrichtung zur Durchführung des Verfahrens nach Anspruch 1, mit mindestens einer Leiterend-Abtastanordnung (10,11,56,71) zur Festlegung der Ausgangsposition des zu bearbeitenden Leiters in dessen Längsrichtung sowie zur Inbetriebsetzung des Abtrenn- bzw. Abisoliervorganges, mit Spannbacken (7,7') zur Fixierung dieser Axialausgangsposition des zu bearbeitenden Leiterendbereiches, mit Schneidenzentrierbacken (10,11) zur Zentrierung des letzteren durch radiale, nicht verformende Anlage an der Außenseite der zu bearbeitenden Ummantelung des Leiters, mit zwei unmittelbar neben den Schneidenzentrierbacken (10,11) auf eine bestimmte Schneidtiefe in Eingriff mit der zu entfernenden Lage der Ummantelung bringbaren, bezüglich der Leiterlängsachse einander diametral gegenüberliegenden Schneidmessern (12,13), sowie mit einer Vorschub- und Rückzugsanordnung (15,16) zur gemeinsamen Verschiebung der auf einem Rotorkopf (2) gemeinsam angeordneten, in radialer Richtung verstellbaren Schneidenzentrierbacken (10, 11) und Schneidmesser (12,13) auf die jeweils gewünschte Abschneidlänge und gemeinsamen Zurückverschiebung dieser Teile nach erfolgter Durchtrennung des gewünschten abzutrennenden Ummantelungsabschnittes zusammen mit dem letzteren.

5. Vorrichtung nach Anspruch 4, dadurch gekennzeichnet, daß in axialer Richtung des zu bearbeitenden Leiterendabschnittes (5) unmittelbar neben den Schneidenzentrierbacken (10,11) eine optische Überwachungsanordnung (3,4) vorgesehen ist, welche bei Feststellung einer Einführung eines zu bearbeitenden Leiterendabschnittes (5) über eine elektronische Auswertschaltung (70) den Abtrenn- und/oder Abisoliervorgang initialisiert.

6. Vorrichtung nach Anspruch 4 oder 5, dadurch gekennzeichnet, daß sie mit zwei mit einer von einer Abrollgeschwindigkeit abweichenden Umfangsgeschwindigkeit in der Art eines Fräsers angetriebenen scheibenförmigen Schneidmessern (12,13) versehen ist, deren Drehzahl vorzugsweise verstellbar ist

7. Vorrichtung nach einem der Ansprüche 4 bis 6, dadurch gekennzeichnet, daß die Schneidmesser (12,13) zur Verstellung des von ihnen bewirkten Schneiddurchmessers über im Rotorkopf (2) um parallel zur RotorkopfDrehaxe (1) verlaufende Schwenkachsen (44) schwenkbar gelagerte Schwenkarme (36,37) verstellbar sind.

8. Vorrichtung nach einem der Ansprüche 4 bis 7, dadurch gekennzeichnet, daß zur Verstellung des von den Schneidmessern (12,13) bewirkten Schneiddurchmessers die Schneidmesser mit Hilfe eines Schrittmotors (34) gegeneinander zu bzw. voneinander weg bewegt werden.

9. Vorrichtung nach Anspruch 6, dadurch gekennzeichnet, daß die Rotationsbewegung der Schneidmesser (12,13) um ihre Rotationsachse zum Abziehen oder Vorziehen eines abgetrennten Ummantelungsabschnittes, d.h. während der Rückzugbewegung des Rotorkopfes (2) von den Spannbacken (7, 7') weg, unterbrochen wird.

10. Vorrichtung nach Anspruch 6 oder 9, dadurch gekennzeichnet, daß die Rotationsbewegung des Rotorkopfes (2) zum Abziehen oder Vorziehen eines abgetrennten Ummantelungsabschnittes, d.h. während der Rückzugbewegung des Rotorkopfes (2) von den Spannbacken (7, 7') weg, unterbrochen oder in eine hin- und her oszillierende Schwenkbewegung geändert wird.

11. Vorrichtung nach einem der Ansprüche 4 bis 10, dadurch gekennzeichnet, daß die Schneidmesser (12,13) am einen Ende je einer zweiarmigen Hebelanordnung (36,37) angeordnet sind, wobei die beiden letzteren um je eine senkrecht zur Rotorkopf-Längsaxe (1) verlaufende Schwenkaxe (44,45) schwenkbar im Rotorkopf (2) gelagert und an ihrem dem Schneidmesser (12,13) abgewandten anderen Ende über eine Kniehebelanordnung (46) mit einem längs der Rotorkopf-Längsaxe (1) verstellbaren Verschiebeteil (48) synchron zueinander verstellbar verbunden sind.

12. Vorrichtung nach Anspruch 11, dadurch gekennzeichnet, daß unmittelbar vor jedem Schneidmesser (12,13) je eine Schneidenzentrierbacke (10,11) vorgesehen ist, daß diese Zentrierbacken (10,11) am einen Ende je einer weiteren zweiarmigen Hebelanordnung (51,52) angeordnet sind, wobei die beiden letzteren um je eine senkrecht zur Rotorkopf-Längsaxe (1) verlaufende Schwenkaxe (44,45) schwenkbar im Rotorkopf (2) gelagert und an ihrem der Schneidenzentrierbacke (10,11) abgewandten anderen Ende über eine weitere Kniehebelanordnung (53) mit einem längs der Rotorkopf-Längsaxe (1) verstellbaren zweiten Verschiebeteil (54) synchron und genau symmetrisch zueinander verstellbar verbunden sind.

13. Vorrichtung nach Anspruch 6, dadurch gekennzeichnet, daß die drehbar im Rotorkopf (2) gelagerten Schneidmesser (12,13) zu ihrem Antrieb über Zahnräder (40,41) mit einem relativ zum Rotorkopf (2) mit einer anderen Drehzahl rotierenden oder stillstehenden Zahnrad (42) resp. Zahnkranz in Eingriff stehen.

14. Vorrichtung nach einem der Ansprüche 4 bis 13, dadurch gekennzeichnet, daß seitlich unmittelbar neben den Schneidenzentrierbacken (10,11) je ein bezüglich der Rotorlängsaxe (1) in radialer Richtung federnd wirkender Grobzentrierteil (8,9) vorgesehen ist, welche derart angeordnet und ausgebildet sind, daß sie die Schneidenzentrierbacken (10,11) gegen die Rotorlängsaxe (1) zu betrachtet überragen und den zu zentrierenden Leiterendabschnitt (5) mindestens teilweise umfassen.

15. Vorrichtung nach Anspruch 11 und 12, dadurch gekennzeichnet, daß die beiden Hebelanordnungen (36,37; 51,52) schwenkbar im Rotorkopf (2) gelagert sind, und die Rotorkopfdrehaxe (1) in der gemeinsamen Schwenkebene (S) dieser beiden Hebelanordnungen verläuft (Fig. 6 und 13).

## Claims

1. Process to cut-off and/or strip at least one layer of sheathing of a cable-like conductor by means of at least two cutting knives, whereby the conductor end to be worked is clamped in its axial position behind the conductor end section (5) to be stripped and kept in its axial position, whereby subsequently a scanning arrangement displaceable in a longitudinal direction of this conductor end section (5) relative to the free end is used to determine the free end of this conductor end section (5), and subsequently the cutting knives (12, 13) are advanced to make cutting contact with the conductor end section (5) to be stripped by a distance (x) corresponding to the cut-off and/or stripping length previously determined from the end position, and after severing of the desired layer at the requested position, this layer is pushed towards the end of the conductor by means of the cutting knives (12, 13), and this cut-off and/or insulation stripping process can be repeated once or several times with graduated cutting depths, if need be.

2. Process according claim 1, characterised by the fact that the conductor end section (5) to be stripped is centred in its axial position directly next to the scan position by means of a centring arrangement (8, 9) at least partially encompassing the section (5) .

3. Process according claims 1, characterised by the fact that a mechanical scanning arrangement (10,11, 56, 71) displaceable along the conductor end section (5) to be stripped is used, and the conductor end is determined by a pressure sensor analysing the feed force of the scanning arrangement.

4. Appliance to perform the process according claim 1, with at least one conductor scanning arrangement (10, 11, 56, 71) used to determine the starting position of the conductor to be worked in its longitudinal direction, and to initiate the severing, respectively the insulation stripping process, with clamping jaws (7, 7') to attach this axial starting position of the conductor end section to be worked, with blade centring jaws (10, 11) used to centre the latter by radial non-deforming contact to the outside of the sheathing of the conductor to be worked, with two cutting knives (12, 13) opposing each other in the longitudinal axle of the conductor to be brought to a certain cutting depth in the sheathing layer to be removed directly next to the blade centring jaws (10, 11), with a feed and return arrangement (15, 16) for common displacement of the blade centring jaws (10, 11) and the cutting knives (12, 13) arranged on a rotor head (2) to be displaced in radial direction to the requested cut-off length, and for mutual return of the parts after successful severing of the requested sheathing section together with the latter.

5. Appliance according claim 4, characterised by the fact that an optical monitoring arrangement (3, 4) is provided in axial direction of the conductor end section (10, 11) to be stripped located directly next to the blade centring jaws (10, 11), which initiates the cut-off and/or insulation stripping process by means of an electronic analysing circuit (70) after detection of a conductor end section (5) inserted.

6. Appliance according claim 4, characterised by the fact that it has been provided with two disk-type cutting knives (12, 13) driven in the kind of a milling cutter by a circumferential speed deviating from the roll-off speed, the speed of which can be adjusted preferably.

7. Appliance according claim 4, characterised by the fact that the cutting knives (12, 13) can be adjusted by swivelling arms (36, 37) pivoted on swivelling axles (44) in rotor head (2) running parallel to the rotating axle (1) of the rotor head to permit an adjustment of the cutting diameter.

8. Appliance according claim 4, characterised by the fact that the cutting knives can be moved towards each other, respectively away from each other by means of a stepping motor (34) for adjustment of the cutting diameters produced by the cutting knives (12, 13).

9. Appliance according claim 6, characterised by the fact that the rotating movement of the cutting knives (12, 13) around their rotation axle is interrupted for removal or moving ahead of a severed sheathing section, i.e. during the return movement of rotor head (2) away from the clamping jaws (7, 7').

10. Appliance according claims 6, characterised by the fact that the rotating movement of rotor head (2) is interrupted or switched to an oscillating swivelling movement for removal or moving ahead of a severed sheathing section, i.e. during the return movement of rotor head (2) away from the clamping jaws (7, 7').

11. Appliance according claim 4, characterised by the fact that the cutting knives (12, 13) are attached to the end of a two-arm lever arrangement (36, 37) each, whereby the two latter are pivoted in rotor head (2) rotating around swivelling axles (44, 45) vertical to the rotor head longitudinal axle (1) each, and whereby the other end pointing away from the cutting knife (12, 13) is connected up synchronously adjustable to a displacement unit (48) adjustable along the longitudinal axle (1) of the rotor head.

12. Appliance according claim 11 characterised by the fact that one blade centring jaw (10, 11) each has been provided directly in front of each cutting knife (12, 13), and that these centring jaws (10, 11) are attached at one end to another two-arm lever arrangement (51, 52) each, whereby the two latter are pivoted in rotor head (2) rotating around swivelling axles (44, 45) vertical to the rotor head longitudinal axle (1) each, and whereby the other end pointing away from the blade centring jaws (10,11) is connected up synchronously and precisely symmetrically adjustable to a second displacement unit (54) adjustable along the longitudinal axle (1) of the rotor head by means of another toggle-lever arrangement (53).

13. Appliance according claim 6, characterised by the fact that for drive the cutting knives (12, 13) privoted in rotor head (2) make contact via toothed wheels to a toothed wheel (42), respectively toothed ring standing still or rotating at a different speed to the rotor head (2).

14. Appliance according one of the claims 4 through 13 characterised by the fact that a rough centring unit (8, 9) each spring-mounted in radial direction relative to the longitudinal rotor axle (1) right next to the blade centring jaws (10, 11) is provided, whereby these centring units have been designed and arranged in such a way that they rise over the blade centring jaws (10, 11) looking along the longitudinal rotor axle (1), and at least partially encompass the conductor end section (5) to be centred.

15. Appliance according claims 11 and 12 characterised by the fact that the two lever arrangements (36, 37; 51, 52) are privoted in rotor head (2), and the rotor head axle (1) rund in the common swivelling level (S) of these two lever arrangements (Fig. 6 and 13).

## Revendications

1. Procédé pour couper et/ou pour dénuder au moins une couche d'une gaine d'un conducteur en forme de câble à l'aide d'au moins deux lames, dans lequel on saisit l'extrémité du conducteur à traiter, derrière la section terminale du conducteur à traiter (5) et on la maintient dans sa position axiale; ensuite, à l'aide d'un agencement de balayage apte à se déplacer par rapport à la section terminale de conducteur (5) dans la direction longitudinale de cette dernière et jusque contre son extrémité libre, on détermine l'extrémité libre de cette section terminale de conducteur (5); ensuite, on amène les lames (12, 13) en engrènement de coupe avec la section terminale de conducteur à traiter (5), sur une distance (X) correspondant à la longueur décalée vers l'arrière par rapport à la position terminale déterminée au préalable, correspondant à la longueur de coupe et/ou de dénudage; après la coupe de part en part de la couche désirée, on déplace cette dernière à l'aide des lames (12, 13) le long de la section terminale jusque contre son extrémité de cette dernière; et on répète le cas échéant ce processus de coupe et/ou de dénudage une ou plusieurs fois avec une profondeur de coupe échelonnée.

2. Procédé selon la revendication 1, caractérisé en ce qu'on centre la section terminale de conducteur à traiter (5) dans sa position axiale, directement à côté de l'endroit de balayage, à l'aide d'un agencement de centrage (8, 9) englobant au moins en partie une des sections (5).

3. Procédé selon la revendication 1 ou 2, caractérisé en ce qu'on utilise un agencement de balayage mécanique (10, 11, 56, 71) apte à se déplacer le long de la section terminale de conducteur (5) à traiter et on détermine l'extrémité du conducteur via un capteur de pression balayant la force nécessaire pour la fermeture de l'agencement de balayage.

4. Dispositif pour la mise en oeuvre du procédé selon la revendication 1, comprenant au moins un agencement de balayage de l'extrémité d'un conducteur (10, 11, 56, 71) pour la détermination de la position de départ du conducteur à traiter dans sa direction longitudinale, ainsi que pour la mise en service du processus de coupe, respectivement de dénudage, des mâchoires de serrage (7, 7') pour fixer cette position de départ axiale de la zone terminale de conducteur à traiter, des mâchoires de centrage lors de la coupe (10, 11) à des fins de centrage de cette zone par mise en contact radiale non déformante avec le côté externe de la gaine du conducteur à traiter, deux lames (12, 13) opposées l'une à l'autre en direction diamétrale par rapport à l'axe longitudinal du conducteur, qui peuvent être amenées, directement à côté des mâchoires de centrage lors de la coupe (10, 11), à une profondeur de coupe déterminée en engrènement avec la couche de la gaine à éliminer, ainsi qu'un agencement de poussée vers l'avant et de traction vers l'arrière (15, 16) pour le déplacement commun des mâchoires de centrage lors de la coupe (10, 11) et des lames (12, 13) aptes à se déplacer en direction radiale et disposées de manière conjointe sur une tête de rotor (2), sur la longueur de coupe respectivement désirée et pour le déplacement en retour conjoint de ces éléments après avoir réalisé la coupe de part en part de la section de gaine à couper désirée, de manière conjointe avec cette dernière.

5. Dispositif selon la revendication 4, caractérisé en ce qu'un agencement de surveillance optique (3, 4) est prévu en direction axiale de la section terminale de conducteur à traiter (5), directement à côté des mâchoires de centrage lors de la coupe (10, 11), qui initialise, via un circuit d'évaluation électronique (70), le processus de coupe et/ou de dénudage après constatation de l'introduction d'une section terminale de conducteur à traiter (5).

6. Dispositif selon la revendication 4 ou 5, caractérisé en ce qu'il est muni de deux lames (12, 13) en forme de disques qui sont entraînées à la manière d'une fraise avec une vitesse périphérique s'écartant de la vitesse de roulement, dont la vitesse de rotation est de préférence réglable.

7. Dispositif selon l'une quelconque des revendications 4 à 6, caractérisé en ce que les lames (12, 13) peuvent être réglées via des bras pivotants (36, 37) montés en pivotement dans la tête de rotor (2) autour d'axes de pivotement (44) s'étendant parallèlement aux axes de rotation (1) de la tête de rotor, à des fins de réglage du diamètre de coupe parcouru par ces lames.

8. Dispositif selon l'une quelconque des revendications 4 à 7, caractérisé en ce que, pour le réglage du diamètre de coupe parcouru par les lames (12, 13), les lames se déplacent en direction l'une de l'autre, respectivement à l'écart l'une de l'autre à l'aide d'un moteur pas-à-pas (34).

9. Dispositif selon la revendication 6, caractérisé en ce que le mouvement de rotation des lames (12, 13) autour de leur axe de rotation à des fins d'enlèvement ou de déplacement vers l'avant d'une section de gaine coupée, c'est-à-dire au cours du mouvement de traction vers l'arrière de la tête de rotor (2) à l'écart des mâchoires de serrage (7, 7'), est interrompu.

10. Dispositif selon la revendication 6 ou 9, caractérisé en ce que le mouvement de rotation de la tête de rotor (2) pour l'enlèvement ou le déplacement vers l'avant d'une section de gaine coupée, c'est-à-dire au cours du mouvement de traction vers l'arrière de la tête de rotor (2) à l'écart des mâchoires de serrage (7, 7'), est interrompu ou est modifié sous la forme d'un mouvement de pivotement à oscillation alternative.

11. Dispositif selon l'une quelconque des revendications 4 à 10, caractérisé en ce que les lames (12, 13) sont disposées à une extrémité de respectivement un agencement de levier à deux bras (36, 37), dans lequel les deux agencements sont montés dans la tête de rotor (2) en pivotement autour de respectivement un axe de pivotement (44, 45) s'étendant perpendiculairement à l'axe longitudinal (1) de la tête de rotor et sont reliés à leur autre extrémité se détournant des lames (12, 13), via un agencement à levier à genouillère (46), à un élément de déplacement (48) apte à se déplacer le long de l'axe longitudinal (1) de la tête de rotor, pour pouvoir se déplacer de manière synchrone l'un par rapport à l'autre.

12. Dispositif selon la revendication 11, caractérisé en ce qu'on prévoit, directement devant chaque lame (12, 13), respectivement une mâchoire de centrage lors de la coupe (10, 11), en ce que ces mâchoires de centrage (10, 11) sont disposées à une extrémité respectivement d'un agencement à levier supplémentaire (51, 52) à deux bras, dans lequel les deux derniers cités sont montés, dans la tête de rotor (2), en pivotement autour de respectivement un axe de pivotement (44, 45) s'étendant perpendiculairement à l'axe longitudinal (1) de la tête de rotor et sont reliés, à leur autre extrémité se détournant des mâchoires de centrage lors de la coupe (10, 11), via un agencement supplémentaire à levier à genouillère (53), à un second élément de déplacement (54) apte à se déplacer le long de l'axe longitudinal (1) de la tête de rotor, de façon à pouvoir se déplacer l'un par rapport à l'autre de manière synchrone et de manière précisément symétrique.

13. Dispositif selon la revendication 6, caractérisé en ce que les lames (12, 13) montées en rotation dans la tête de rotor (2) entrent en engrènement pour leur actionnement, via des roues dentées (40, 41), avec une roue dentée (42), respectivement une couronne dentée fixe ou rotative par rapport à la tête de rotor (2) avec une autre vitesse de rotation.

14. Dispositif selon l'une quelconque des revendications 4 à 13, caractérisé en ce qu'on prévoit, en position latérale, directement à côté des mâchoires de centrage lors de la coupe (10, 11), respectivement un élément de centrage grossier (8, 9) ayant un effet de ressort en direction radiale par rapport à l'axe longitudinal (1) du rotor, ces éléments étant disposés et réalisés de telle sorte qu'ils font saillie par rapport aux mâchoires de centrage lors de la coupe (10, 11) lorsqu'on regarde dans la direction de l'axe longitudinal (1) du rotor et de telle sorte qu'ils englobent au moins en partie la section terminale de conducteur à centrer (5).

15. Dispositif selon les revendications 11 et 12, caractérisé en ce que les deux agencements à leviers (36, 37; 51, 52) sont montés en pivotement dans la tête de rotor (2), l'axe de rotation (1) de la tête du rotor s'étendant dans le plan de pivotement commun (S) de ces deux agencements à leviers (voir les figures 6 et 13).
